# EUROPEAN PATENT APPLICATION

(11) **EP 2 775 348 A1**
(43) Date of publication of application: **10.09.2014**
(21) Application number: 13188830.7
(22) Date of filing: 16.10.2013
(51) Int. Cl.: G02F 1/1362, G02F 1/1335

(54) **Active matrix and display panel comprising same**

(30) Priority: 07.03.2013 US 201361774561 P; 03.10.2013 US 201314045343
(71) Applicant: Himax Display, Inc., Tainan City 74148 (TW)
(72) Inventor: Li, Yuet-Wing, 74148 Tainan City (TW); Fan-Chiang, Kuan-Hsu, 74148 Tainan City (TW)
(74) Representative: Becker Kurig Straus

(57) **Abstract**

An active matrix (200) including a substrate (210), a plurality of active devices (220), a plurality of pixel electrodes (230), a bottom reflective layer (240), and a plurality of conductive elements (250) is provided. The active devices are arranged on the substrate in an array. The pixel electrodes are respectively disposed above the active devices. The bottom reflective layer is disposed between the substrate and the pixel electrodes. The conductive elements penetrate through the bottom reflective layer and respectively connect the pixel electrodes and the active devices. A display panel is also provided.

## Description

### BACKGROUND OF THE INVENTION

### 1. Field of the Invention

The invention generally relates to an electronic element and an optical device and, in particular, to an active matrix and a display panel.

### 2. Description of Related Art

In the display region, there are various types of spatial light modulators to convert an illumination beam into an image beam, for example, transmissive liquid crystal display (LCD) panels, liquid-crystal-on-silicon (LCOS) panels, or digital micro-mirror devices (DMDs). In an LCOS panel, the pixel electrodes are reflective pixel electrodes which can cover the transistors without adversely affecting the optical property. However, in a transmissive LCD panel, the pixel electrodes are transparent pixel electrodes, so that thin film transistors that may block or absorb light are covered by the black matrix, and the black matrix reduces the area of the pixel electrodes. As a result, compared to the transmissive LCD panel, the LCOS panel has pixels having a larger aperture ratio.

When a projector, for example, a pico projector, is smaller, or when the resolution of the LCOS panel is increased, the pixel size is smaller. In the LCOS panel, the width of the gap between any two pixel electrodes has a lower limit. When the width of the gap is smaller than the lower limit, a short circuit may occur. Consequently, when the pixel size is smaller and when the width of the gap between any two pixel electrodes is unable to be smaller, the aperture ratio of the pixel is reduced. As a result, the reflectance of the LCOS panel is reduced, which reduces the brightness of the frame provided by the projector.

### SUMMARY OF THE INVENTION

Accordingly, the invention is directed to an active matrix which has higher reflectance.

The invention is directed to a display panel which has higher reflectance.

According to an embodiment of the invention, an active matrix including a substrate, a plurality of active devices, a plurality of pixel electrodes, a bottom reflective layer, and a plurality of conductive elements is provided. The active devices are arranged on the substrate in an array. The pixel electrodes are respectively disposed above the active devices. The bottom reflective layer is disposed between the substrate and the pixel electrodes. The conductive elements penetrate through the bottom reflective layer and respectively connect the pixel electrodes and the active devices.

According to an embodiment of the invention, a display panel including the above active matrix, an opposite substrate, and a liquid crystal layer is provided. The opposite substrate is disposed above the active matrix and includes a transparent substrate and a transparent conductive layer. The transparent conductive layer is disposed on the transparent substrate and between active matrix and the transparent substrate, wherein the pixel electrodes are disposed between the substrate and the transparent substrate. The liquid crystal layer is disposed between the active matrix and the opposite substrate.

In the active matrix and the display panel according to the embodiment of the invention, since light which the pixel electrodes can not reflect is reflected by the bottom reflective layer, the reflectance of the active matrix and the display panel is increased. As a result, the display panel is able to provide an image with higher brightness.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic local cross-sectional view of a display panel according to an embodiment of the invention.

FIG. 2 is reflectance spectra of the display panel in FIG. 1 and a display panel not adopting the bottom reflective layer in FIG. 1.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

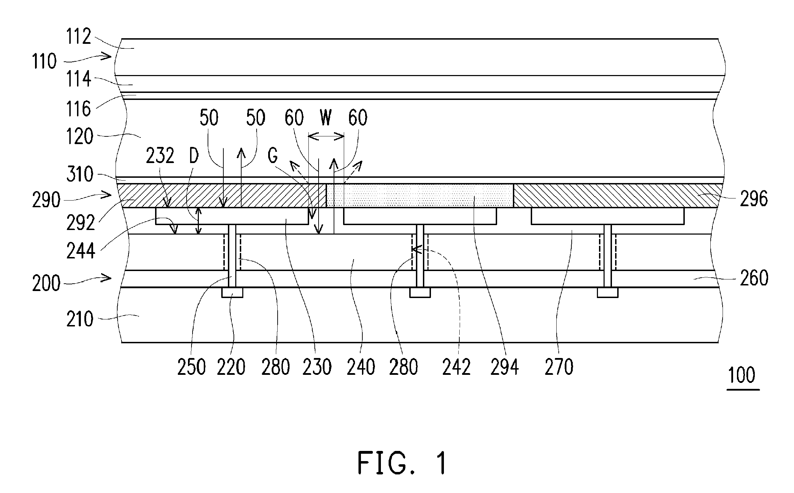

FIG. 1 is a schematic local cross-sectional view of a display panel according to an embodiment of the invention. Referring to FIG. 1, the display panel 100 in this embodiment includes an active matrix 200, an opposite substrate 110, and a liquid crystal layer 120. The active matrix 200 includes a substrate 210, a plurality of active devices 220, a plurality of pixel electrodes 230, a bottom reflective layer 240, and a plurality of conductive elements 250. In this embodiment, the substrate 210 is a silicon substrate. The active devices 220 are arranged on the substrate 210 in an array. The active devices 220 may be transistors. The pixel electrodes 230 are respectively disposed above the active devices 220. The bottom reflective layer 240 is disposed between the substrate 210 and the pixel electrodes 230. In this embodiment, the pixel electrodes 230 are reflective pixel electrodes which are capable of reflecting light. The pixel electrodes 230 may be made of metal, for example, aluminum. The bottom reflective layer 240 may be made of metal, for example, aluminum. The conductive elements 250 penetrate through the bottom reflective layer 240 and respectively connect the pixel electrodes 230 and the active devices 220.

In this embodiment, the conductive elements 250 are made of metal and electrically connect the active devices 220 and the pixel electrodes 230. There are a plurality of scan lines and a plurality of data lines on the substrate 210, and each of the active devices 220 is connected to one of the scan lines and one of the data lines. In other words, the active matrix 200 in this embodiment is an active matrix of an LCOS panel. Specifically, in this embodiment, the bottom reflective layer 240 has a plurality of via holes 242, and the conductive elements 250 penetrate the via holes 242, respectively.

In this embodiment, the active matrix 100 further includes a first insulation layer 260 and a second insulation layer 2770. The first insulation layer 260 is disposed between the substrate 210 and the bottom reflective layer 240. The second insulation layer 270 is disposed between the bottom reflective layer 240 and the pixel electrodes 230. The conductive elements 250 penetrate through the first insulation layer 260 and the second insulation layer 270. Moreover, in this embodiment, the conductive elements 250 may be insulated from the bottom reflective layer by insulation layers 280.

In this embodiment, the active matrix 200 further includes a color filter array 290. The color filter array 290 may include a plurality of red filters 292, a plurality of green filters 294, and a plurality of blue filters 296 arranged in an array on the pixel electrodes 230. In addition, in this embodiment, the active matrix 200 further includes an alignment layer 310 disposed on the color filter array 290.

The opposite substrate 110 is disposed above the active matrix 200 and includes a transparent substrate 112 and a transparent conductive layer 114. The transparent conductive layer 114 is disposed on the transparent substrate 112 and between active matrix 200 and the transparent substrate 112, wherein the pixel electrodes 230 are disposed between the substrate 210 and the transparent substrate 112. In this embodiment, the transparent substrate 112 may be a glass substrate, and the transparent conductive layer 114 may be made of indium tin oxide (ITO). Moreover, in this embodiment, the opposite substrate 110 further includes an alignment layer 116 disposed on the transparent conductive layer 114 and between the transparent conductive layer 114 and the active matrix 200. The liquid crystal layer 120 is disposed between the active matrix 200 and the opposite substrate 110. Specifically, the liquid crystal layer 120 is disposed between the alignment layer 310 and the alignment layer 116. In this embodiment, the display panel 100 is an LCOS panel.

In the active matrix 200 and the display panel 100 according to this embodiment, light 60 which the pixel electrodes 230 can not reflect is reflected by the bottom reflective layer 240. Specifically, the light 60 passes through the gap G between any two adjacent pixel electrodes 230 is reflected by the bottom reflective layer 240. Consequently, the reflectance of the active matrix 200 and the display panel 100 is increased. Therefore, the display panel 100 is able to provide an image with higher brightness. In this way, even if the pixel size is reduced and the aperture ratio of the pixel is reduced, the display panel 100 still maintains high reflectance.

In this embodiment, the gap G between any two adjacent pixel electrodes 230 has a width W ranging from 0.2 microns to 0.5 microns, so that the display panel 100 may have a high aperture ratio of the pixel. Moreover, in this embodiment, a distance D between a first surface 232 of each of the pixel electrodes 230 facing away from the substrate 210 and a second surface 244 of the bottom reflective layer 240 facing away from the substrate 210 is greater than 0 and is smaller than or equal to 1.5 microns. Specifically, in this embodiment, the distance D between the first surface 232 and the second surface 244 is N times a predetermined wavelength, where the N is a positive integer, and the predetermined wavelength is within a wavelength range of green light. As a result, the light 60 reflected by the bottom reflective layer 240 less interferes with the light 50 reflected by the pixel electrodes 230. Therefore, the uniformity of the image provided by the display panel 100 is improved.

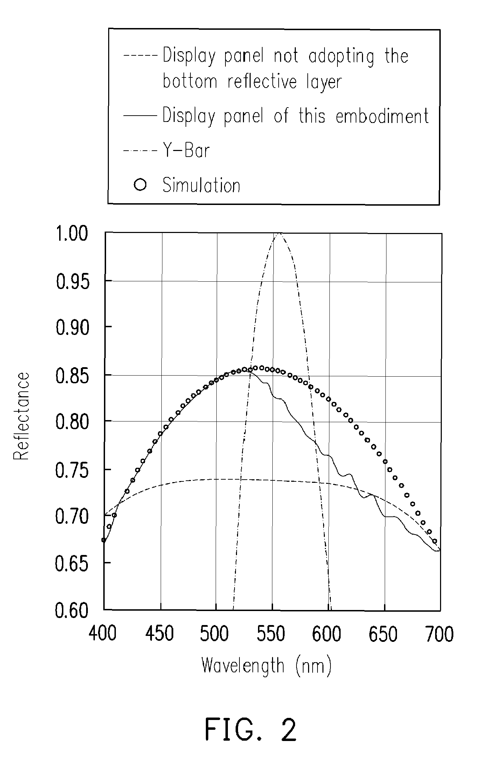

FIG. 2 is reflectance spectra of the display panel in FIG. 1 and a display panel not adopting the bottom reflective layer in FIG. 1. Referring to FIGs. 1 and 2, the curve of Y-Bar means the photonic response curve of the human eye. The curve of the display panel of this embodiment is obtained in a condition that the width of the pixel (including all sub-pixels in one pixel, e.g. a red sub-pixel, a green sub-pixel, and a blue sub-pixel) is 8 microns, the width W is 0.28 microns, and the distance D is about 0.19 microns. The curve of the display panel not adopting bottom reflective layer is obtained in a condition that the width of the pixel (including all sub-pixels in one pixel) is 8 microns. The curve of simulation is obtained by optical simulation and in a condition that the width W is 0.32 microns, and the distance D is 0.18 microns. In FIG. 2, both the curves of the display panel of this embodiment and simulation are higher than the curve of the display panel not adopting the bottom reflective layer in the wavelength range of green. As a result, the human eye feels brighter the image provided by the display panel 100 in this embodiment.

In conclusion, in the active matrix and the display panel according to the embodiment of the invention, the light which the pixel electrodes can not reflect is reflected by the bottom reflective layer. Specifically, the light passes through the gap between any two adjacent pixel electrodes is reflected by the bottom reflective layer. Consequently, the reflectance of the active matrix and the display panel is increased. Therefore, the display panel is able to provide an image with higher brightness. In this way, even if the pixel size is reduced and the aperture ratio of the pixel is reduced, the display panel according to the embodiment of the invention still maintains high reflectance.

## Claims

1. An active matrix (200) comprising:
a substrate (210);
a plurality of active devices (220) arranged on the substrate (210) in an array;
a plurality of pixel electrodes (230) respectively disposed above the active devices (220);
a bottom reflective layer (240) disposed between the substrate (210) and the pixel electrodes (230); and
a plurality of conductive elements (250) penetrating through the bottom reflective layer (240) and respectively connecting the pixel electrodes (230) and the active devices (220).

2. The active matrix (200) according to claim 1, wherein a gap (G) between any two adjacent pixel electrodes (230) has a width (W) ranging from 0.2 microns to 0.5 microns

3. The active matrix (200) according to claim 1 or 2, wherein a distance (D) between a first surface (232) of each of the pixel electrodes (230) facing away from the substrate (210) and a second surface (244) of the bottom reflective layer (240) facing away from the substrate (210) is greater than 0 and is smaller than or equal to 1.5 microns.

4. The active matrix (200) according to claim 3, wherein the distance (D) between the first surface (232) and the second surface (244) is N times a predetermined wavelength, the N is a positive integer, and the predetermined wavelength is within a wavelength range of green light.

5. The active matrix (200) according to any one of claims 1-4 further comprising a color filter array (290) disposed on the pixel electrodes (230).

6. The active matrix (200) according to any one of claims 1-5 further comprising:
a first insulation layer (260) disposed between the substrate (210) and the bottom reflective layer (240); and
a second insulation layer (270) disposed between the bottom reflective layer (240) and the pixel electrodes (230), wherein the conductive elements (250) penetrate through the first insulation layer (260) and the second insulation layer (270).

7. The active matrix (200) according to any one of claims 1-6, wherein the pixel electrodes (230) are reflective pixel electrodes.

8. The active matrix (200) according to any one of claims 1-7, wherein the substrate (210) is a silicon substrate, and the active devices (220) are transistors.

9. A display panel (100) comprising:
an active matrix (200) comprising:
a substrate (210);
a plurality of active devices (220) arranged on the substrate (210) in an array;
a plurality of pixel electrodes (230) respectively disposed above the active devices (220);
a bottom reflective layer (240) disposed between the substrate (210) and the pixel electrodes (230); and
a plurality of conductive elements (250) penetrating through the bottom reflective layer (240) and respectively connecting the pixel electrodes (230) and the active devices (220);
an opposite substrate (110) disposed above the active matrix (200) and comprising:
a transparent substrate (112); and
a transparent conductive layer (114) disposed on the transparent substrate (112) and between active matrix (200) and the transparent substrate (112), wherein the pixel electrodes (230) are disposed between the substrate (210) and the transparent substrate (112); and
a liquid crystal layer (120) disposed between the active matrix (200) and the opposite substrate (110).

10. The display panel (100) according to claim 9, wherein a gap (G) between any two adjacent pixel electrodes (230) has a width (W) ranging from 0.2 microns to 0.5 microns

11. The display panel (100) according to claim 9 or 10, wherein a distance (D) between a first surface (232) of each of the pixel electrodes (230) facing away from the substrate (210) and a second surface (244) of the bottom reflective layer (240) facing away from the substrate (210) is greater than 0 and is smaller than or equal to 1.5 microns.

12. The display panel (100) according to claim 11, wherein the distance (D) between the first surface (232) and the second surface (244) is N times a predetermined wavelength, the N is a positive integer, and the predetermined wavelength is within a wavelength range of green light.

13. The display panel (100) according to any one of claims 9-12, wherein the active matrix (200) further comprises a color filter array (290) disposed on the pixel electrodes (230).

14. The display panel (100) according to any one of claims 9-13, wherein the active matrix (200) further comprises:
a first insulation layer (260) disposed between the substrate (210) and the bottom reflective layer (240); and
a second insulation layer (270) disposed between the bottom reflective layer (240) and the pixel electrodes (230), wherein the conductive elements (250) penetrate through the first insulation layer (260) and the second insulation layer (270).

15. The display panel (100) according to any one of claims 9-14, wherein the pixel electrodes (230) are reflective pixel electrodes.

16. The display panel (100) according to any one of claims 9-15, wherein the substrate (210) is a silicon substrate, and the active devices (220) are transistors.
